# EUROPÄISCHE PATENTANMELDUNG

(11) **EP 4 194 826 A1**
(43) Veröffentlichungstag der Anmeldung: **14.06.2023**
(21) Anmeldenummer: 22204972.8
(22) Anmeldetag: 02.11.2022
(51) Int. Cl.: G01K 1/16, G01K 7/42, G01K 13/02

(54) **VERFAHREN ZUR VERARBEITUNG EINES SENSORWERTES, VORZUGSWEISE EINES TEMPERATURSENSORWERTES**

(30) Priorität: 09.12.2021 DE 102021214062
(71) Anmelder: ContiTech Techno-Chemie GmbH, 61184 Karben (DE)
(72) Erfinder: Richards, Justin, 30165 Hannover (DE); Campana, Manuel, 30165 Hannover (DE)
(74) Vertreter: Continental Corporation

(57) **Zusammenfassung**

Die vorliegende Erfindung betrifft Verfahren zur Verarbeitung eines Sensorwertes, vorzugsweise eines Temperatursensorwertes, mit wenigstens den Schritten:
• indirektes Erfassen (100) des Sensorwertes mittels eines Messwertumformers (25) eines Sensors (2), vorzugsweise eines Temperatursensors (2),
• Verstärken (200) des erfassten Sensorwertes,
• Verarbeiten (300) des verstärkten Sensorwertes mittels eines Filters, vorzugsweise eines Kalman-Filters, und
• Ausgeben (400) des verarbeiteten Sensorwertes.

## Beschreibung

Die vorliegende Erfindung betrifft ein Verfahren zur Verarbeitung eines Sensorwertes, vorzugsweise eines Temperatursensorwertes, einen Sensor, vorzugsweise einen Temperatursensor, sowie ein Medienführungssystem.

Zum Transport bzw. zur Führung von Medien wie insbesondere von Fluiden ist die Verwendung von Schläuchen und Rohren bekannt, welche gemeinsam auch als Medienführungen bezeichnet werden können. Schläuche werden dabei als eher flexibel hinsichtlich ihres Materials angesehen, Rohre als eher starr. Zu den Fluiden gehören neben Flüssigkeiten auch Gase und pastöse Stoffe.

Mehrere Schläuche können dabei untereinander mittels Schlauchkupplungen miteinander verbunden werden, welche jeweils an dem entsprechenden offenen Ende fest an dem jeweiligen Schlauch angeordnet sind. Über derartige Schlauchkupplungen können Schläuche ebenfalls mit Aggregaten verbunden werden, welche ihrerseits eine entsprechende Kupplung aufweisen. Derartige Schlauchkupplungen können als sogenannte Schnellkupplungen, im Englischen als Quick Connector bezeichnet, ausgebildet sein, welche ein schnelles und einfaches Verbinden und zerstörungsfreies Lösen ermöglichen können. Derartige Schlauchkupplungen können aus Metall aber auch aus Kunststoff, insbesondere als Spritzgussteile, ausgebildet sein. Dies gilt vergleichbar für Rohre. Entsprechend können derartige Schlauch- oder Rohrkupplungen auch gemeinsam als Medienführungskupplungen bezeichnet werden.

Für viele Anwendungen kann es sinnvoll oder sogar erforderlich sein, die Temperatur des strömenden Mediums sensorisch zu erfassen. Hierzu ist es beispielsweise bekannt, einen Temperatursensor, üblicherweise in Form eines NTC-Thermistors (Heißleiter mit negativem Temperaturkoeffizienten), in eine Öffnung einer Schnellkupplung einzusetzen. Das Sensorelement bzw. der Messwertumformer des NTC-Thermistors ragt dabei durch eine Durchgangsöffnung der Schnellkupplung in das Medium hinein und hat somit direkten Kontakt zum Medium, was die Temperaturübertragung von Medium zu Messwertumformer begünstigen, d.h. die Ansprechzeit des NTC-Thermistors geringhalten kann.

Nachteilig ist hierbei, dass die Durchgangsöffnung durch die Schnellkupplung hindurch, welche der Aufnahme und Durchführung des Messwertumformers des NTC-Thermistors dient, mit aufgenommenem Messwertumformer mediendicht abzuschließen ist. Entsprechend sind Maßnahmen zu treffen, um die Dichtigkeit am Anschluss des Messwertumformers herzustellen. Diese Maßnahmen können mit höheren Kosten für zusätzliche Komponenten und dem Risiko von verbleibenden Undichtigkeiten verbunden sein.

Nachteilig ist ferner, dass beim Austausch des Messwertumformers, beispielsweise im Falle eines Defekts, ein umfangreicher Arbeitsaufwand anfallen kann. Durch die Tatsache, dass bei einer Demontage der entnommene Messwertumformer eine offene Durchgangsöffnung in das Innere der Schnellkupplung hinterlässt, muss vor dem Austausch des Messwertumformers das Medium aus dem System entfernt werden.

Alternativ ist daher bekannt, in der Schnellkupplung eine Mulde vorzusehen, welche orthogonal zum Fluss des Mediums angebracht ist. Mit anderen Worten ist für den Messwertumformer des NTC-Thermistors keine Durchgangsöffnung vorhanden, so dass die entsprechenden zuvor beschriebenen Nachteile vermieden werden können. Stattdessen ist der Messwertumformer des NTC-Thermistors in der Mulde der Schnellkupplung angeordnet und ragt somit, durch das Material der Schnellkupplung muldenförmig umgeben, in das Medium hinein, ohne mit dem Medium in direkten Kontakt zu kommen.

Dabei ist zwischen der Oberfläche des Messwertumformers und der Innenwand der Mulde ein Freiraum mit einem Wärmeleitmittel auf Silikonbasis gefüllt, um die Wärmeübertragung vom Medium durch das Material der Mulde hindurch und über das Wärmeleitmittel zum Messwertumformer zu verbessern. Die Wärme des Mediums dringt somit bei diesem Aufbau durch das Material der Mulde und durch das Wärmeleitmittel hindurch und gelangt so zum Messwertumformer des NTC-Thermistors.

Nachteilig ist hierbei, dass die hohe Wärmekapazität des Materials der Mulde inklusive ihrer Füllung mit dem Wärmeleitmittel dennoch zu einer verhältnismäßig hohen Ungenauigkeit der Temperaturerfassung führt sowie eine vergleichsweise lange Ansprechzeit verursacht. Diese vergleichsweise lange Ansprechzeit der Temperaturerfassung führt somit dazu, dass vom Temperatursensor eine sozusagen veraltete Temperatur erfasst wird, welche im Fall einer sich verändernden und insbesondere vergleichsweise schnell verändernden Temperatur des zu erfassenden Mediums gar nicht mehr dessen tatsächlicher aktueller Temperatur entsprechen kann. Hierdurch kann es zu Ungenauigkeiten bei der Durchführung einer temperaturabhängigen Steuerung oder Regelung kommen, welcher auf der sensorisch erfassten Temperatur des Mediums beruht. Dabei hängt das Maß der Ungenauigkeit bzw. der hieraus resultierenden Auswirkungen je nach Anwendungsfall von der Ansprechzeit des Temperatursensors sowie von der Schnelligkeit der Temperaturänderung des Mediums ab. Dies kann vergleichbar für andere physikalische Größe gelten, welche sensorisch erfasst werden können.

Nachteilig ist ferner, dass sich der NTC-Thermistor samt Messwertumformer nur schwierig und mit Hilfe von Werkzeugen aus der Mulde entnehmen lässt, indem an den elektrischen Kontakten des Steckverbinders des NTC-Thermistors gezogen wird. Dieser Vorgang ist sehr unpraktisch und sorgt zudem dafür, dass das flüssige Wärmeleitmittel aus der Mulde austritt. Auch können die elektrischen Kontakte hierdurch vom Steckverbinder des NTC-Thermistors abgerissen werden, was den NTC-Thermistor unbrauchbar machen würde.

Eine Aufgabe der vorliegenden Erfindung ist es, eine Möglichkeit zu schaffen, so dass die Nachteile bekannter derartiger Messungen allgemein und insbesondere Temperaturmessungen bzw. Messverfahren von Temperaturen behoben oder zumindest reduziert werden können. Dies soll insbesondere für ein Medienführungssystem mit einer Medienführung und mit einem Temperatursensor der eingangs beschriebenen Art erfolgen. Insbesondere soll ein derartiges Medienführungssystem mit mediendichtem Temperatursensor und gleichzeitig kürzerer Ansprechzeit, vorzugsweise ferner mit höherer Genauigkeit der Temperaturerfassung, als bisher bekannt geschaffen werden. Dies soll insbesondere möglichst einfach, kompakt, kostengünstig, flexibel anwendbar und bzw. oder intuitiv umsetzbar erfolgen. Zumindest soll eine Alternative zu bekannten derartigen Messungen bzw. Temperaturmessungen, Sensoren bzw. Temperatursensoren und bzw. oder Medienführungssystemen mit einer Medienführung und mit einem Temperatursensor geschaffen werden.

Die Aufgabe wird erfindungsgemäß durch ein Verfahren, durch einen Sensor, durch ein Medienführungssystem sowie durch eine Medienführung mit den Merkmalen der unabhängigen Patentansprüche gelöst. Vorteilhafte Weiterbildungen sind in den Unteransprüchen beschrieben.

Somit betrifft die Erfindung ein Verfahren zur Verarbeitung eines Sensorwertes, vorzugsweise eines Temperatursensorwertes, mit wenigstens den Schritten:
- indirektes Erfassen des Sensorwertes mittels eines Messwertumformers eines Sensors, vorzugsweise eines Temperatursensors,
- Verstärken des erfassten Sensorwertes,
- Verarbeiten des verstärkten Sensorwertes mittels eines Filters, vorzugsweise eines Kalman-Filters, und
- Ausgeben des verarbeiteten Sensorwertes.

Der vorliegenden Erfindung liegt dabei die Erkenntnis zugrunde, dass mittels eines Filters und insbesondere mittels eines Kalman-Filters als ein mathematisches Verfahren zur iterativen Schätzung von Parametern zur Beschreibung von Systemzuständen auf der Basis von fehlerbehafteten Beobachtungen Störungen, welche durch die vorangehende Signalverstärkung verursacht werden können, wieder reduziert werden können. Entsprechend kann die Signalverstärkung erfolgen, ohne die Qualität des erfassten Messwertes und insbesondere Temperaturmesswertes zu beeinträchtigen.

Mit anderen Worten betrifft die vorliegende Erfindung die indirekte Messung physikalischer Größen und insbesondere das Gebiet der indirekten Temperaturmessung bei medien- bzw. fluiddurchströmten Bauteilen. Anders als bei einer direkten Temperaturmessung hat dabei der Messwertumformer keinen unmittelbaren Kontakt zum Medium. Beispielhaft für diese Art von Messtechnik ist ein T-Stück einer Schlauch- oder Rohrleitung, bei dem ein NTC-Thermistor (Negative Temperature Coefficient Thermistor) in einer orthogonal zur Fließrichtung des Mediums liegenden Vertiefung platziert ist, wie eingangs beschrieben. Dies gilt vergleichbar für andere indirekte Messungen.

Betrachtet man beispielsweise die sensorische Temperaturerfassung eines entsprechenden Temperatursensors wie beispielsweise eines NTC-Thermistor, so beschreibt die thermische Ansprechzeit τ die Zeit vom Auftreten eines Temperatursprungs im Medium bis zum Erreichen eines bestimmten Anteils wie beispielsweise von 63,2% des maximalen Ausgangswertes des Messwertumformers für den korrespondierenden Temperaturwert des Eingangssprungs. Durch die Vergrößerung der Wärmekapazität durch die Geometrie des Aufbaus und die Verlängerung der Strecke, die von der Wärme vom Medium zum Messwertumformer zurückgelegt werden muss, tritt, im Vergleich zu einer direkten Messmethode, eine Verlängerung der thermischen Ansprechzeit des Messwertumformers auf.

Es kann daher als Aufgabe angesehen werden, bei indirekten Messungen und insbesondere bei indirekten Temperaturmessungen eine Ansprechzeit bzw. die thermische Ansprechzeit zu erreichen, wie sie bei direkten Messmethoden üblich ist. Dies kann insbesondere für Flüssigkeitssysteme in Fahrzeugen erstrebenswert sein, um dort auf Veränderungen der Temperatur von Fluiden wie beispielsweise Kühlflüssigkeiten gesteuert oder geregelt möglichst schnell reagieren zu können.

Für die Lösung des Problems wird die Annahme getroffen, dass die geometrischen und materialtechnischen Eigenschaften des Aufbaus bzw. der Anwendung bekannt sind und sich gar nicht oder lediglich vernachlässigbar verändern.

Erfindungsgemäß wird bei der Verarbeitung des sensorisch erfassten Temperaturwertes angesetzt, indem ein Filteralgorithmus verwendet wird. Ein derartige Filteralgorithmus kann insbesondere ein Kalman-Filter sein.

Somit kann in einem ersten Verfahrensschritt beispielsweise ein indirektes Erfassen des Temperatursensorwertes mittels eines Messwertumformers eines Temperatursensors derart erfolgen, dass ein Temperatursprung am Eingang des Messaufbaus in eine elektrisch messbare Größe umgewandelt wird.

Aufgrund der unterschiedlichen Wärmekapazitäten der Materialien innerhalb des Messaufbaus in und um den NTC Thermistor kann es sich dabei um ein Subsystem mit PTn-Verhalten handeln. Zur Beschleunigung der Ansprechzeit erfolgt daher in einem zweiten Schritt ein Verstärken des erfassten Temperatursensorwertes. Die Verstärkung des Signals kann dabei variabel und eine Funktion der Ableitung des Signals über die Zeit sein. Es kann im Fall eines zeitdiskreten Signals sich dies durch die Bestimmung der Differenz zwischen dem aktuellen und dem vorherigen Abtastwert beschreiben lassen.

Durch diese Art der Signalverarbeitung kann sich jedoch der Signal-Rausch-Abstand verringern. Der Wunsch nach einem möglichst schnellen Signalanstieg und einem möglichst großen Signal-Rausch-Abstand sind somit hierbei konkurrierende Ziele.

Um der Zunahme des Rauschens entgegenzuwirken, kann daher das Signal mithilfe eines Filters und insbesondere mittels eines Kalman-Filters weiterverarbeitet werden, d.h. es kann ein Verarbeiten des verstärkten Temperatursensorwertes mittels eines Filters bzw. Kalman-Filters als dritter Verfahrensschritt erfolgen. Dieser Filter kann eine Tiefpasscharakteristik aufweisen, so dass der Filter gegenüber diskreten FIR-Filtern den Vorteil besitzen kann, dass die Phasenlaufzeit des Systems geringer ist. Der Algorithmus vom Filter bzw. Kalman-Filter kann dann einen Teil des Eingangssignals zum Ausgangssignal hinzuaddieren. Der Faktor, mit dem dies geschieht, kann variabel und abhängig von der Differenz zwischen Ein- und Ausgangssignal des Filters der vorherigen Abtastwerte sein. Das Ziel des Filters bzw. Kalman-Filters ist es, durch die Vorhersage dieses Faktors eine möglichst schnelle Filterung zur Minimierung der Varianz des Ausgangssignals vorzunehmen. Nach jedem Abtastwert wird die Vorhersage des Faktors überprüft und durch den realen Eingangswert angepasst.

Anschließend kann ein Ausgeben des verarbeiteten Sensorwertes wie beispielsweise des verarbeiteten Temperatursensorwertes erfolgen, um den verbesserten Messwert z.B. der Temperatur verwenden zu können.

Der Filteralgorithmus lässt sich beispielsweise an unterschiedlichen Orten innerhalb des Temperaturmesssystems eines Mediums beispielsweise in einem Fahrzeug integrieren. Bevorzugt kann eine Hardware- oder Software-Implementierung auf einer Verarbeitungseinheit in unmittelbarer Umgebung der Messstelle sein. Durch die Erhöhung der Empfindlichkeit des zweiten Schrittes können die Signalleitungen zwischen dem ersten und zweiten Schritt kurzgehalten werden, um ein eingeprägtes Rauschen zu minimieren. Alternativ lässt sich der Algorithmus auf der Verarbeitungseinheit beispielsweise des Fahrzeugs integrieren.

Durch die einheitenlose Signalverarbeitung kann sich diese Erfindung für alle Anwendungen nutzen lassen, in denen eine Beschleunigung der Ansprechzeit nützlich bzw. nötig ist. Die Charakteristik der Signalverarbeitung kann einer PID-Regelung entsprechen, welche allgemein bekannt ist.

Die Erfindung ist insbesondere einsetzbar für jegliche Anwendungen, bei denen die Temperatur des Mediums innerhalb einer Medienführung wie insbesondere innerhalb eines Schlauch- oder Rohrsystems gemessen werden soll. Als Anwendung ist insbesondere die Temperaturmessung von Kühlmitteln in batterieelektrischen Fahrzeugen denkbar. Eine Verarbeitungseinheit, welche das erfindungsgemäß Verfahren ausführen kann, kann dabei zusammen mit der Messstelle in Schlauch-Kupplungen integriert werden, welche am Zu- und Abfluss des Kühlmittelkreislaufs der Batterieeinheit sitzen.

In jedem Fall kann das erfindungsgemäße Verfahren von einem Sensor bzw. Temperatursensor bzw. dessen Signalverarbeitungseinheit ausgeführt werden, wie weiter unten näher beschrieben werden wird. Alternativ kann der Sensorwert bzw. Temperatursensorwert auch mittels eines Messwertumformers eines Sensors bzw. eines Temperatursensors erfasst und dann an eine Signalverarbeitungseinheit oder dergleichen ausgegeben werden, so dass die übrigen Verfahrensschritte des erfindungsgemäßen Verfahrens auch von einer Signalverarbeitungseinheit oder dergleichen ausgeführt werden, welche eine unabhängige bzw. separate Einheit ist. Entsprechend können diese Schritte des erfindungsgemäßen Verfahrens auch in eine übergeordnete bzw. zentrale Steuerungseinheit beispielsweise eines Fahrzeugs integriert und dort ausgeführt werden.

Die vorliegende Erfindung betrifft auch einen Sensor, vorzugsweise einen Temperatursensor, mit einem Messwertumformer, wobei der Sensor ausgebildet ist:
- mittels seines Messwertumformers einen Sensorwert, vorzugsweise einen Temperatursensorwert, indirekt zu erfassen,
- den erfassten Sensorwert zu verstärken,
- den verstärkten Sensorwert mittels eines Filters, vorzugsweise eines Kalman-Filters, zu verarbeiten und
- den verarbeiteten Sensorwert auszugeben.

Hierdurch kann ein Sensor und insbesondere ein Temperatursensor geschaffen werden, welche das zuvor beschriebene erfindungsgemäße Verfahren selbst ausführen und somit den verarbeiteten Sensorwert bzw. Temperatursensorwert ausgeben bzw. nach außen zur Verfügung stellen kann. Somit lässt sich das erfindungsgemäße Verfahren direkt im Sensor bzw. im Temperatursensor umsetzten, so dass ein Anwender davon entlastet wird, das erfindungsgemäße Verfahren außerhalb des Sensors bzw. Temperatursensors zu implementieren.

Die vorliegende Erfindung betrifft auch ein Medienführungssystem mit einer Medienführung, vorzugsweise mit einer Schnellkupplung, mit einer Durchgangsöffnung zur Führung eines Mediums durch sich hindurch, wobei die Medienführung eine Leitelementaufnahme mit einem thermischen Leitelement aufweist und wobei das thermische Leitelement durch das Material der Leitelementaufnahme von der Durchgangsöffnung mediendicht getrennt ist, und mit einem Temperatursensor, vorzugsweise mit einem NTC-Thermistor, wie zuvor beschrieben welcher mit der Medienführung verbunden und außerhalb der Durchgangsöffnung angeordnet ist, wobei der Temperatursensor wenigstens einen Messwertumformer aufweist, welcher in thermisch leitfähigem Kontakt mit dem thermischen Leitelement angeordnet ist.

Hierdurch kann ein derartiges Medienführungssystem geschaffen werden, welches den zuvor beschriebenen erfindungsgemäßen Sensor als Temperatursensor aufweisen kann, um dessen Eigenschaften und Vorteile wie zuvor beschrieben bei einer Temperaturmessung umsetzen und nutzen zu können.

Vorzugsweise ist das thermische Leitelement als Metallstab, vorzugsweise als Kupferstab, oder als thermisch leitfähiges Polymer ausgebildet. Dies kann eine besonders einfache, kostengünstige und bzw. oder wirkungsvolle Umsetzung ermöglichen.

Gemäß einem Aspekt der Erfindung bildet das thermische Leitelement einen thermisch leitfähigen Pfad zwischen der Leitelementaufnahme und dem Messwertumformer derart, so dass der Messwertumformer außerhalb der Leitelementaufnahme angeordnet ist.

Mit anderen Worten ist das thermische Leitelement nicht wie aus dem Stand der Technik als Wärmeleitmittel auf Silikonbasis flüssig, um als Füllung den Freiraum zwischen der Oberfläche des Messwertumformers und der Innenwand der Mulde der Freiraum zu füllen, was im Wesentlichen seitlich des Messwertumformers erfolgt. Vielmehr dient erfindungsgemäß das thermische Leitelement als thermischer Übertrager, d.h. als thermischer Pfad bzw. als thermische Leitung, zwischen der Innenseite der Leitelementaufnahme auf der einen Seite und dem Messwertumformer des Temperatursensors auf der anderen Seite. Hierzu kann das thermische Leitelement als starrer Körper, insbesondere aus Metall, ausgebildet sein, oder auch aus einem nicht-starren thermisch leitfähigen Material wie beispielsweise aus einem thermisch leitfähigen Polymer. Auch kann das thermische Leitelement flüssig bzw. pastös sein. Unter starr ist dabei eine nichtflüssige und nicht-pastöse Konsistenz des thermischen Leitelements zu verstehen, welche mittels eines Festkörpers umgesetzt werden kann. Unter flüssig bzw. pastös sind Fluide zu verstehen.

Diesem Aspekt der vorliegenden Erfindung liegt dabei die Erkenntnis zugrunde, dass durch den eingangs beschriebenen Stand der Technik zwar eine mediendichte Trennung des Messwertumformers bekannter Temperatursensoren und der Durchgangsöffnung einer Medienführung geschaffen werden kann, dies jedoch Nachteile mit sich bringt, wie zuvor beschrieben. Insbesondere wird dabei der Messwertumformer bekannter Temperatursensoren als Messspitze von Innen in die Mulde der Medienführung gesteckt und der verbleibende Hohlraum mit einem flüssigen Wärmeleitmittel auf Silikonbasis an der Spitze des Messwertumformers sowie radial zum Messwertumformer gefüllt.

Im Gegensatz hierzu wird erfindungsgemäß eine derartige thermische Verbindung zwischen der Innenseite der Leitelementaufnahme der Medienführung, welche der Durchgangsöffnung der Medienführung abgewandt ist, und dem Messwertumformer des Temperatursensors mittels des thermischen Leitelements hergestellt, welches somit eine thermische Brücke zwischen der Innenseite der Leitelementaufnahme der Medienführung und dem Messwertumformer des Temperatursensors darstellt. Entsprechend kann der Messwertumformer des Temperatursensors weiter von der Innenseite des Medienführung weg angeordnet werden, was den Gestaltungsspielraum derartiger Medienführungen und bzw. oder Temperatursensoren erhöhen kann. Insbesondere muss der Messwertumformer des Temperatursensors nicht in die Leitelementaufnahme der Medienführung hineinragen, was eine entsprechende hervorragende bzw. längliche Ausgestaltung des Messwertumformers erfordern und somit zu gewissen konstruktiven Randbedingungen des Messwertumformers führen würde, welche erfindungsgemäß vermieden werden können. Dies kann auch die Kosten und bzw. oder den Bauraumbedarf des Messwertumformers des Temperatursensors geringhalten.

Gleichzeitig kann durch die thermische Leitfähigkeit des thermischen Leitelements eine ausreichend gute und bzw. oder schnelle thermische Leitung erreicht werden, auch über einen gewissen Abstand, um eine hohe Genauigkeit und bzw. oder eine geringe Ansprechzeit zu erreichen. Dabei kann der thermisch leitfähige Kontakt zwischen dem thermischen Leitelement und dem Messwertumformer direkt berührend oder auch indirekt berührend, beispielsweise mittels eines Überbrückungsmediums wie beispielsweise mittels einer Wärmeleitpaste, umgesetzt werden.

Gemäß einem Aspekt der Erfindung erstreckt sich das thermische Leitelement im Wesentlichen entlang seiner Längsachse und der Messwertumformer ist entlang der Längsachse des thermischen Leitelements in thermisch leitfähigem Kontakt mit dem thermischen Leitelement angeordnet. Dies kann die Beabstandung des Messwertumformers des Temperatursensors zur Innenseite der Leitelementaufnahme der Medienführung begünstigen.

Gemäß einem weiteren Aspekt der Erfindung berühren sich das thermische Leitelement und der Messwertumformer direkt. Dies kann die thermische Übertragung zwischen dem thermischen Leitelement und dem Messwertumformer des Temperatursensors begünstigen.

Gemäß einem weiteren Aspekt der Erfindung erstreckt sich das thermische Leitelement bis nach außerhalb des Querschnitts der Durchgangsöffnung. Dies kann die Beabstandung des Messwertumformers des Temperatursensors zur Innenseite der Leitelementaufnahme der Medienführung begünstigen.

Gemäß einem weiteren Aspekt der Erfindung wird das thermische Leitelement senkrecht zu seiner Längsachse zumindest im Wesentlichen, vorzugsweise vollständig, von dem Material der Leitelementaufnahme, vorzugsweise berührend, umgeben. Mit anderen Worten ist das thermische Leitelement entsprechend von dem Material der Leitelementaufnahme umschlossen, so dass die thermische Übertragung entlang der Längsachse zum Messwertumformer des Temperatursensors hin erfolgen kann. Dies kann die Beabstandung des Messwertumformers des Temperatursensors zur Innenseite der Leitelementaufnahme der Medienführung begünstigen.

Gemäß einem weiteren Aspekt der Erfindung ist die Medienführung zumindest abschnittsweise als Spritzgussteil ausgebildet, wobei das thermische Leitelement von dem Material der Leitelementaufnahme umspritzt aufgenommen wird. Dies kann die Umsetzung vereinfachen. Alternativ wäre es beispielsweise auch möglich, das thermische Leitelement geklebt, gefügt oder als Presspassung mit Dichtelement in der Leitelementaufnahme anzuordnen.

Gemäß einem weiteren Aspekt der Erfindung ragt die Leitelementaufnahme zumindest abschnittsweise, vorzugsweise vollständig, vorzugsweise senkrecht zur Durchgangsöffnung, in die Durchgangsöffnung hinein. Dies kann die Kontaktfläche zwischen der Leitelementaufnahme und damit auch dem thermischen Leitelement vergrößern und damit auch die thermische Übertragung zwischen dem Medium und dem thermischen Leitelement verbessern.

Gemäß einem weiteren Aspekt der Erfindung weist der Temperatursensor dem thermischen Leitelement der Medienführung zugewandt eine Leiterplatte mit dem Messwertumformer auf. Dies kann die Umsetzung des Temperatursensors vereinfachen.

Gemäß einem weiteren Aspekt der Erfindung weist die Medienführung eine Sensoraufnahme auf, in welcher der Temperatursensor gehalten wird. Dies kann eine einfache Möglichkeit darstellen, den Temperatursensor an der Medienführung anzuordnen.

Gemäß einem weiteren Aspekt der Erfindung weist die Sensoraufnahme der Medienführung eine Sicherungsmittelaufnahme mit einem Sicherungsmittel auf und der Temperatursensor weist ein Sicherungsmittel auf, welches von dem Sicherungsmittel der Medienführung gehalten wird. Dies kann eine einfache Möglichkeit darstellen, den Temperatursensor an der Medienführung anzuordnen und ohne zusätzliche Mittel dort zu halten.

Diesen weiteren Aspekt der Erfindung dadurch umzusetzen, dass die Sensoraufnahme der Medienführung eine Sicherungsmittelaufnahme als Querschlitz und insbesondere als Paar von Querschlitzen mit einem Sicherungsbügel aufweist und ein radialer Vorsprung des Temperatursensors entlang der Längsachse hintergriffen wird, kann eine besondere einfache, kostengünstige, einfach verbindbare sowie lösbare und dennoch haltbare Verbindung zwischen dem Temperatursensor und der Medienführung ermöglichen. Alternativ wäre beispielsweise hierzu auch ein Bajonett-Verschluss verwendbar.

Gemäß einem weiteren Aspekt der Erfindung ist zwischen der Sensoraufnahme der Medienführung und dem Temperatursensor, vorzugsweise einem Gehäuse des Temperatursensors, ein Dichtungsmittel, vorzugsweise ein O-Ring, derart angeordnet, so dass der Messwertumformer innerhalb der Sensoraufnahme der Medienführung mediendicht abgedichtet ist. Dies kann die Abdichtung des Messwertumformers des Temperatursensors gegenüber der Umgebung ermöglichen.

Gemäß einem weiteren Aspekt der Erfindung weist der Temperatursensor einen drahtgebundenen oder drahtlosen Sensoranschluss auf. Hierdurch können insbesondere die Messdaten des Messwertumformers nach außerhalb des Temperatursensors zur Verfügung gestellt werden, um dort verarbeitet und genutzt zu werden.

Die vorliegende Erfindung betrifft auch eine Medienführung zur Verwendung in einem Medienführungssystem wie zuvor beschrieben. Hierdurch kann eine Medienführung bereitgestellt werden, um ein Medienführungssystem wie zuvor beschrieben umsetzen und dessen Eigenschaften und Vorteile nutzen zu können.

Ein Ausführungsbeispiel und weitere Vorteile der Erfindung werden nachstehend im Zusammenhang mit den folgenden Figuren erläutert. Darin zeigt:
- Fig. 1: einen Längsschnitt durch eine erfindungsgemäße Medienführung in Form einer Schnellkupplung;
- Fig. 2: eine perspektivische Darstellung eines erfindungsgemäßen Sensors als Temperatursensor;
- Fig. 3: einen Längsschnitt durch ein erfindungsgemäßes Medienführungssystem mit der Schnellkupplung der Fig. 1 und dem Temperatursensor der Fig. 2;
- Fig. 4: ein Ablaufdiagramm eines erfindungsgemäßen Verfahrens; und
- Fig. 5A-5C: drei Diagramme mit Signalverläufen über der Zeit entsprechend des erfindungsgemäßen Verfahrens.

Die Beschreibung der o.g. Figuren erfolgt in zylindrischen Koordinaten mit einer Längsachse X, einer zur Längsachse X senkrecht ausgerichteten radialen Richtung R sowie einer um die Längsachse X umlaufenden Umfangsrichtung U. Die Längsachse X, die radiale Richtung R und die Umfangsrichtung U können gemeinsam auch als Raumrichtungen X, R, U bzw. als zylindrische Raumrichtungen X, R, U bezeichnet werden.

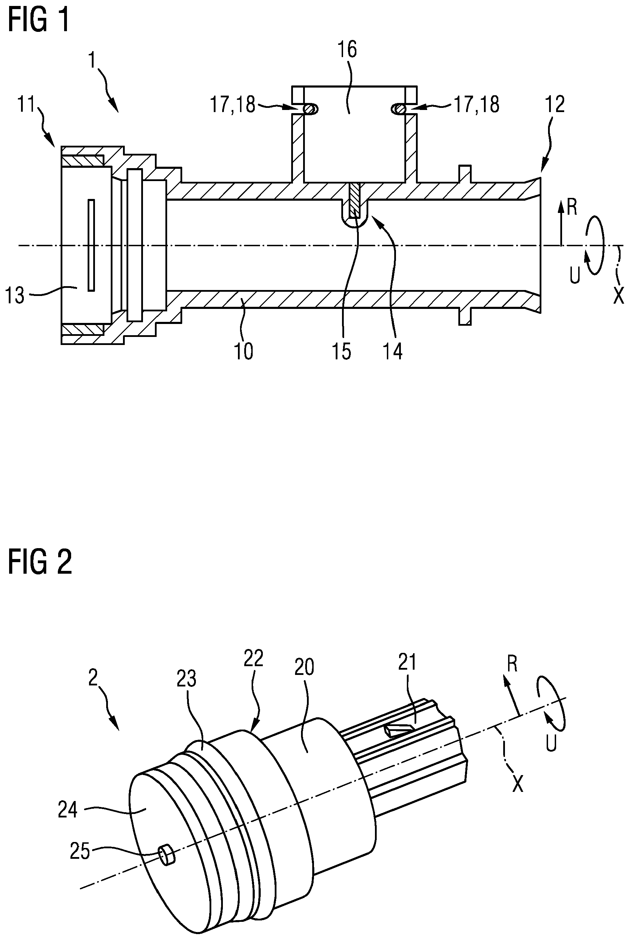

Fig. 1 zeigt einen Längsschnitt durch eine erfindungsgemäße Medienführung 1 in Form einer Schnellkupplung1. Die Schnellkupplung 1 besteht im Wesentlichen aus einem Körper 10 als Spritzgussteil, durch welchen hindurch zwischen einem ersten Ende 11 bzw. einem ersten Verbindungsmittel 11 und einem zweiten Ende 12 bzw. einem zweiten Verbindungsmittel 12 entlang der Längsachse X eine Durchgangsöffnung 13 verläuft. Senkrecht zur Längsachse X ragt eine Leitelementaufnahme 14 als zapfenartiger Versprung in die Durchgangsöffnung 13 hinein. Die Leitelementaufnahme 14 wird vom Körper 10 einstückig, d.h. integral, ausgeformt und ist somit mediendicht geschlossen.

Innerhalb der Leitelementaufnahme 14 ist ein stabförmiges thermisches Leitelement 15 in Form eines Metallstabes 15 als Kupferstab 15 angeordnet. Der Kupferstab 15 ist vom Material des Körpers 11, welches die Leitelementaufnahme 14 bildet, umspritzt und somit direkt stoffschlüssig verbunden, wodurch der Kupferstab 15 nicht nur sicher gehalten und positioniert wird, sondern wodurch auch die thermische Übertragung zwischen einem Medium innerhalb der Durchgangsöffnung 13 und dem Kupferstab 15 verbessert wird. Nach radial außen erstreckt ist das obere Ende des Kupferstabes 15 knapp über die radiale Außenseite des Körpers 10 hinweg.

Radial nach außen ragt, ebenfalls einstückig vom Körper 10 ausgeformt, eine zylindrische Sensoraufnahme 16 vom Körper 10 der Schnellkupplung 1 weg, wobei die zylindrische Sensoraufnahme 16 zentrisch um das Ende des Kupferstabes 15 angeordnet ist. In seinem oberen Bereich weist die zylindrische Sensoraufnahme 16 einander gegenüberliegend eine Sicherungsmittelaufnahme 17 in Form eines Paares von Querschlitzen 17 auf, welche ein Sicherungsmittel 18 in Form eines Sicherungsbügels 18 verliersicher aber zerstörungsfrei lösbar aufnehmen.

Fig. 2 zeigt eine perspektivische Darstellung eines erfindungsgemäßen Sensors 2 als Temperatursensor 2. Der Temperatursensor 2 ist als NTC-Thermistor 2 ausgebildet und weist ein Sensorgehäuse 20 auf, welches im Wesentlichen zylindrisch entlang der Längsachse X ausgebildet ist.

Entlang der Längsachse X an einem Ende weist das Sensorgehäuse 20 einen Sensoranschluss 21 auf, um mittels einer Leitung mit einer Auswerteeinheit (nicht dargestellt) oder dergleichen verbunden zu werden. Entlang der Längsachse X in der gegenüberliegenden Richtung bildet das Gehäuse 20 ein Sicherungsmittel 22 in Form eines radialen Vorsprungs 22 aus, dem sich eine Aufnahme (nicht dargestellt) mit einem in der Umfangsrichtung U geschlossen verlaufenden Dichtungsmittel 23 in Form eines O-Rings 23 anschließt. Die Stirnseite des Temperatursensors 2 wird von einer Leiterplatte 24 gebildet, welche mittig, d.h. auf der Längsachse X, einen entlang der Längsachse X hervorragenden Messwertumformer 25 aufweist, welcher auch als Sensorelement 25 bezeichnet werden kann.

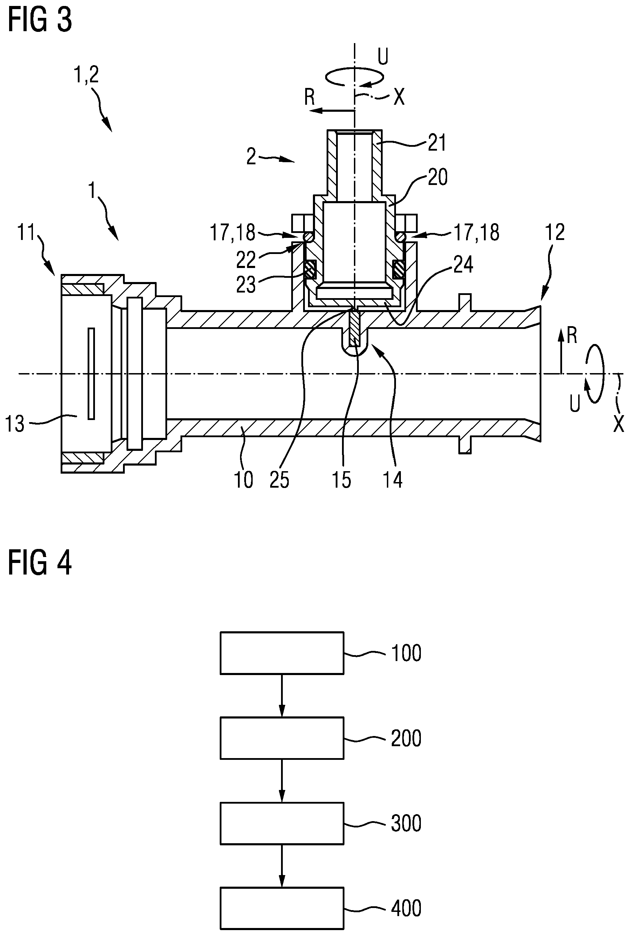

Fig. 3 zeigt einen Längsschnitt durch ein erfindungsgemäßes Medienführungssystem 1, 2 mit der Schnellkupplung 1 der Fig. 1 und dem Temperatursensor 2 der Fig. 2. Der Temperatursensor 2 ist mit dem Messwertumformer 25 voran in die Sensoraufnahme 16 der Schnellkupplung 1 eingeführt worden, wozu der Sicherungsbügel 18 zunächst entfernt und anschließend wieder eingesetzt wurde, so dass der Vorsprung 22 des Sensorgehäuses 20 entlang der Längsachse X des Temperatursensors 2 von hinten sicher gehalten wird.

Der Messwertumformer 25 des Temperatursensors 2 ist in dieser Position in direktem berührenden Kontakt mit dem radial äußeren Ende des Kupferstabes 15, so dass der Messwertumformer 25 die Temperatur des Kupferstabes 15 sensorisch erfassen und über den Sensoranschluss 21 nach außen übermitteln kann. Dabei sind der Sicherungsbügel 18 bzw. die Querschlitze 17 der Sensoraufnahme 16 der Schnellkupplung 1 und der Vorsprung 22 des Sensorgehäuses 20 des Temperatursensors 2 derart aufeinander abgestimmt, dass der berührende direkte Kontakt zwischen dem radial äußeren Ende des Kupferstabes 15 und dem Messwertumformer 25 sichergestellt ist.

Strömt nun ein Medium wie beispielsweise eine Kühlflüssigkeit durch die Durchgangsöffnung 13 der Schnellkupplung 1, so gleicht sich die Temperatur der Leitelementaufnahme 14 der Schnellkupplung 1 der Temperatur der Kühlflüssigkeit an. Dies gilt mit einem gewissen zeitlichen Verzug auch für den Kupferstab 15, welcher jedoch eine vergleichsweise hohe bzw. gute thermische Leitfähigkeit aufweist, so dass der zeitliche Verzug der thermischen Übertragung hier geringgehalten werden kann. Somit erreicht die Temperatur der Kühlflüssigkeit über den Kupferstab 15 als thermische Brücke vergleichsweise schnell den Messwertumformer 25 des Temperatursensors 2, sodass auch Temperaturänderungen der Kühlflüssigkeit vergleichsweise schnell sensorisch erfasst werden können.

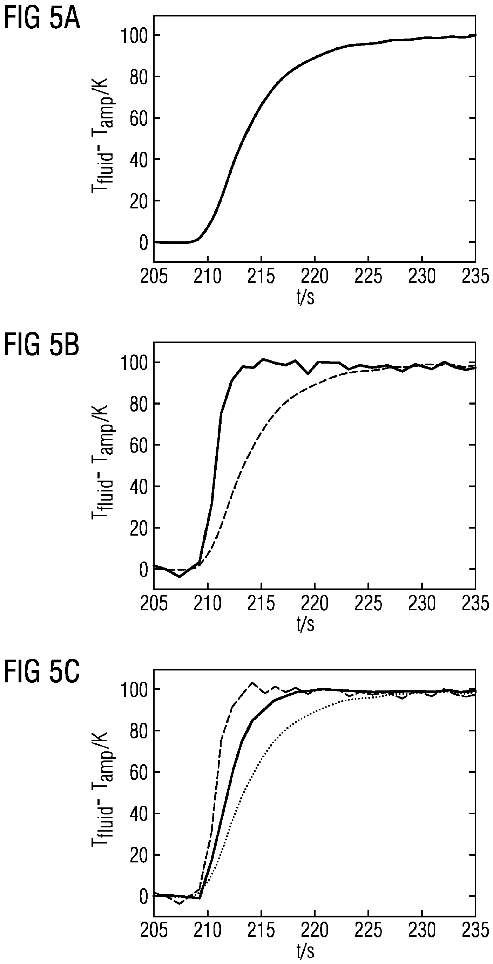

Um dabei die Zeitverzögerung in der Messwerterfassung des Messwertumformers 25 des Temperatursensors 2 zu reduzieren, welche sich aus dem zeitlichen Verzug der thermischen Übertragung des Kupferstabs 15 ergibt, wird seitens des Temperatursensors 2 bzw. dessen Signalverarbeitungseinheit (nicht dargestellt) ein erfindungsgemäßes Verfahren wie folgt umgesetzt, siehe auch Ablaufdiagramm der Figur 4:
In einem ersten Schritt 100 erfolgt ein indirektes Erfassen des Sensorwertes als Temperatursensorwert, indem der Messwertumformer 25 die Temperatur des Kupferstabes 15 sensorisch erfasst, siehe Fig. 5A. Somit steht die Temperatur des Fluids dem Temperatursensor 2 bzw. dessen Signalverarbeitungseinheit zur Verfügung.

Dort erfolgt dann in einem zweiten Schritt 200 ein Verstärken des erfassten Sensorwertes als Temperatursensorwert, siehe Fig. 5B, wodurch der zeitliche Verzug zwischen sensorisch indirekt erfasster Temperatur des Fluids und tatsächlicher aktueller Temperatur des Fluids reduziert werden kann, welcher durch das Material der Leitelementaufnahme 15 und den Kupferstab 15 verursacht wird. Diese Verstärkung verursacht jedoch ein gewisses Rauschen des Messsignals, so dass sich die Signalqualität verschlechtert.

In einem dritten Schritt 300 erfolgt daher ein Verarbeiten des verstärkten Sensorwertes als Temperatursensorwert mittels eines Filters in Form eines Kalman-Filters, wodurch sich das Rauschen des Messsignals verringern und somit die Signalqualität verbessern lässt, siehe Fig. 5C. Somit liegt ein Messsignal mit verringertem zeitlichen Verzug vor, ohne dass dessen Signalqualität verschlechtert wurde. Dieses Messsignal kann dann in einem vierten Schritt 400 als verarbeiteter Sensorwert bzw. Temperatursensorwert vom Temperatursensor 2 ausgegeben werden.

### Bezugszeichenliste (Teil der Beschreibung)

- R: radiale Richtung
- U: Umfangsrichtung
- X: Längsachse

- 1, 2: Medienführungssystem

- 1: Medienführung; Schnellkupplung
- 10: Körper
- 11: erstes Ende; erstes Verbindungsmittel
- 12: zweites Ende; zweites Verbindungsmittel
- 13: Durchgangsöffnung
- 14: Leitelementaufnahme
- 15: thermisches Leitelement; Metallstab; Kupferstab
- 16: Sensoraufnahme
- 17: Sicherungsmittelaufnahme; Querschlitze
- 18: Sicherungsmittel; Sicherungsbügel

- 2: Sensor; Temperatursensor; NTC-Thermistor
- 20: Sensorgehäuse
- 21: Sensoranschluss
- 22: Sicherungsmittel; Vorsprung
- 23: Dichtungsmittel; O-Ring
- 24: Leiterplatte
- 25: Messwertumformer; Sensorelement

- 100: indirektes Erfassen eines (Temperatur-)Sensorwertes
- 200: Verstärken des erfassten (Temperatur)-Sensorwertes
- 300: Verarbeiten des verstärkten (Temperatur-)Sensorwertes mittels eines (Kalman-)Filters
- 400: Ausgeben des verarbeiteten (Temperatur-)Sensorwertes

## Patentansprüche

1. Verfahren zur Verarbeitung eines Sensorwertes, vorzugsweise eines Temperatursensorwertes, mit wenigstens den Schritten:
• indirektes Erfassen (100) des Sensorwertes mittels eines Messwertumformers (25) eines Sensors (2), vorzugsweise eines Temperatursensors (2),
• Verstärken (200) des erfassten Sensorwertes,
• Verarbeiten (300) des verstärkten Sensorwertes mittels eines Filters, vorzugsweise mittels eines Kalman-Filters, und
• Ausgeben (400) des verarbeiteten Sensorwertes.

2. Sensor (2), vorzugsweise Temperatursensor (2), besonders vorzugsweise NTC-Thermistor (2),
mit einem Messwertumformer (25),
wobei der Sensor (2) ausgebildet ist:
• mittels seines Messwertumformers (25) einen Sensorwert, vorzugsweise einen Temperatursensorwert, indirekt zu erfassen,
• den erfassten Sensorwert zu verstärken,
• den verstärkten Sensorwert mittels eines Filters, vorzugsweise mittels eines Kalman-Filters, zu verarbeiten und
• den verarbeiteten Sensorwert auszugeben.

3. Medienführungssystem (1, 2)
mit einer Medienführung (1), vorzugsweise Schnellkupplung (1), mit einer Durchgangsöffnung (13) zur Führung eines Mediums durch sich hindurch, wobei die Medienführung (1) eine Leitelementaufnahme (14) mit einem thermischen Leitelement (15) aufweist, und
wobei das thermische Leitelement (15) durch das Material der Leitelementaufnahme (14) von der Durchgangsöffnung (13) mediendicht getrennt ist, und
mit einem Temperatursensor (2), vorzugsweise NTC-Thermistor (2), gemäß Anspruch 2, welcher mit der Medienführung (1) verbunden und außerhalb der Durchgangsöffnung (13) angeordnet ist,
wobei der Temperatursensor (2) wenigstens einen Messwertumformer (25) aufweist, welcher in thermisch leitfähigem Kontakt mit dem thermischen Leitelement (15) angeordnet ist.

4. Medienführungssystem (1, 2) nach Anspruch 3,
wobei das thermische Leitelement (15) einen thermisch leitfähigen Pfad zwischen der Leitelementaufnahme (14) und dem Messwertumformer (25) derart bildet, so dass der Messwertumformer (25) außerhalb der Leitelementaufnahme (14) angeordnet ist.

5. Medienführungssystem (1, 2) nach Anspruch 3 oder 4,
wobei sich das thermische Leitelement (15) im Wesentlichen entlang seiner Längsachse (X) erstreckt und
wobei der Messwertumformer (25) entlang der Längsachse (X) des thermischen Leitelements (15) in thermisch leitfähigem Kontakt mit dem thermischen Leitelement (15) angeordnet ist.

6. Medienführungssystem (1, 2) nach einem der Ansprüche 3 bis 5,
wobei sich das thermische Leitelement (15) und der Messwertumformer (25) direkt berühren.

7. Medienführungssystem (1, 2) nach einem der Ansprüche 3 bis 6,
wobei sich das thermische Leitelement (15) bis nach außerhalb des Querschnitts der Durchgangsöffnung (13) erstreckt.

8. Medienführungssystem (1, 2) nach einem der Ansprüche 3 bis 7,
wobei das thermische Leitelement (15) senkrecht zu seiner Längsachse (X) zumindest im Wesentlichen, vorzugsweise vollständig, von dem Material der Leitelementaufnahme (14), vorzugsweise berührend, umgeben wird.

9. Medienführungssystem (1, 2) nach einem der Ansprüche 3 bis 8,
wobei die Medienführung (1) zumindest abschnittsweise als Spritzgussteil ausgebildet ist,
wobei das thermische Leitelement (15) von dem Material der Leitelementaufnahme (14) umspritzt aufgenommen wird.

10. Medienführungssystem (1, 2) nach einem der Ansprüche 3 bis 9,
wobei die Leitelementaufnahme (14) zumindest abschnittsweise, vorzugsweise vollständig, vorzugsweise senkrecht zur Durchgangsöffnung (13), in die Durchgangsöffnung (13) hineinragt.

11. Medienführungssystem (1, 2) nach einem der Ansprüche 3 bis 10,
wobei der Temperatursensor (2) dem thermischen Leitelement (15) der Medienführung (1) zugewandt eine Leiterplatte (24) mit dem Messwertumformer (25) aufweist.

12. Medienführungssystem (1, 2) nach einem der Ansprüche 3 bis 11,
wobei die Medienführung (1) eine Sensoraufnahme (16) aufweist, in welcher der Temperatursensor (2) gehalten wird.

13. Medienführungssystem (1, 2) nach Anspruch 12,
wobei die Sensoraufnahme (16) der Medienführung (1) eine Sicherungsmittelaufnahme (17), vorzugsweise als Querschlitz (17), besonders vorzugsweise als Paar von Querschlitzen (17), mit einem Sicherungsmittel (18), vorzugsweise mit einem Sicherungsbügel (18), aufweist, und
wobei der Temperatursensor (2) ein Sicherungsmittel (22), vorzugsweise einen radialen Vorsprung (22), aufweist, welches von dem Sicherungsmittel (18) der Medienführung (1) gehalten, vorzugsweise entlang der Längsachse (X) hintergriffen, wird, und/oder
wobei zwischen der Sensoraufnahme (16) der Medienführung (1) und dem Temperatursensor (2), vorzugsweise einem Gehäuse (20) des Temperatursensors (2), ein Dichtungsmittel (23), vorzugsweise ein O-Ring (23), derart angeordnet ist, so dass der Messwertumformer (25) innerhalb der Sensoraufnahme (16) der Medienführung (1) mediendicht abgedichtet ist.

14. Medienführungssystem (1, 2) nach einem der Ansprüche 3 bis 13,
wobei der Temperatursensor (2) einen drahtgebundenen oder drahtlosen Sensoranschluss (21) aufweist.

15. Medienführung (1) zur Verwendung in einem Medienführungssystem (1, 2) nach einem der Ansprüche 3 bis 14.
